# EUROPEAN PATENT APPLICATION

(11) **EP 4 557 703 A1**
(43) Date of publication of application: **21.05.2025**
(21) Application number: 23851489.7
(22) Date of filing: 30.06.2023
(51) Int. Cl.: H04L 67/1001

(54) **OBJECT STORAGE SERVICE CONFIGURATION METHOD AND APPARATUS BASED ON CLOUD COMPUTING TECHNOLOGY**

(30) Priority: 12.08.2022 CN 202210965641; 31.01.2023 CN 202310064313
(71) Applicant: Huawei Cloud Computing Technologies Co., Ltd., Guiyang, Guizhou 550025 (CN)
(72) Inventor: WANG, Zhengyang, Guiyang, Guizhou 550025 (CN)
(74) Representative: Goddar, Heinz J.
(86) International application number: PCT/CN2023/105068
(87) International publication number: WO 2024/032262

(57) **Abstract**

An object storage service configuration method based on a cloud computing technology is provided, and includes: A cloud management platform records a correspondence between an identifier of a source object in a data bucket of an object storage service and an attribute of the source object, where the attribute of the source object indicates a data chunk distribution location and a data size of the source object in an infrastructure; receives, from a hard link creation interface, a hard link creation request sent by a client, where the hard link creation request carries the identifier of the source object in the data bucket, and indicates the cloud management platform to create, in the data bucket, a first object that has a hard link relationship with the source object; and creates, in the data bucket based on the hard link creation request, the first object that has the hard link relationship with the source object, sets an identifier and an attribute for the first object, and records a correspondence between the identifier of the first object and the attribute of the first object, where the attribute of the first object is set to be the same as the attribute of the source object. In this way, a hard link is created in the object storage service.

## Description

This application claims priorities to Chinese Patent Application No. 202210965641.5, filed with the China National Intellectual Property Administration on August 12, 2022, and entitled "METHOD FOR IMPLEMENTING HARD LINK IN OBJECT STORAGE", and to Chinese Patent Application No. 202310064313.2, filed with the China National Intellectual Property Administration on January 31, 2023, and entitled "OBJECT STORAGE SERVICE CONFIGURATION METHOD AND APPARATUS BASED ON CLOUD COMPUTING TECHNOLOGY", both of which are incorporated herein by reference in their entireties.

### TECHNICAL FIELD

This application relates to the field of information technologies (information technologies, ITs), and in particular, to an object storage service configuration method and apparatus based on a cloud computing technology.

### BACKGROUND

An object storage service is an object-based massive storage service of a public cloud, and provides a tenant of the public cloud with massive, secure, highly reliable, and low-cost data storage capabilities. Because object storage is different from file storage, a hard link in file storage cannot be used in object storage. Therefore, how to create a hard link in the object storage service is a technical problem that currently needs to be urgently resolved.

### SUMMARY

This application provides an object storage service configuration method and apparatus based on a cloud computing technology, a computing device, a computing device cluster, a computer storage medium, and a computer product, to create a hard link in an object storage service.

According to a first aspect, this application provides an object storage service configuration method based on a cloud computing technology. The method may be applied to a cloud management platform. The cloud management platform may be configured to manage an infrastructure for running an object storage service. The infrastructure may include a plurality of data centers disposed in different regions, and each data center includes a plurality of servers.

The method may include: The cloud management platform records a correspondence between an identifier of a source object in a data bucket of the object storage service and an attribute of the source object, where the attribute of the source object indicates a data chunk distribution location and a data size of the source object in the infrastructure; the cloud management platform receives, from a hard link creation interface, a first hard link creation request sent by a first client, where the first hard link creation request carries the identifier of the source object in the data bucket, and indicates the cloud management platform to create, in the data bucket, a first object that has a hard link relationship with the source object, and the hard link creation interface is disposed on the cloud management platform; and the cloud management platform creates, in the data bucket based on the first hard link creation request, the first object that has the hard link relationship with the source object, sets an identifier and an attribute for the first object, and records a correspondence between the identifier of the first object and the attribute of the first object, where the attribute of the first object is set to be the same as the attribute of the source object.

Therefore, in the object storage service, an attribute of one source object (which indicates the data chunk distribution location and the data size of the source object in the infrastructure) is associated with identifiers of a plurality of objects, so that an attribute of an object points to the identifiers of different objects. In this way, an object is hard-linked to another object in the object storage service, in other words, the hard link is created in the object storage service. For example, the attribute of the object may be indicated by using index node (inode) metadata of the object, and the identifier of the object may be indicated by using directory entry (dentry) metadata of the object.

In a possible implementation, the identifier of the source object is indicated by using directory entry (dentry) metadata of the source object, and the attribute of the source object is indicated by using index node (inode) metadata of the source object. The dentry metadata and the inode metadata of the source object are obtained by splitting metadata of the source object. The identifier of the first object is indicated by using dentry metadata of the first object, and the attribute of the first object is indicated by using the inode metadata of the source object.

In a possible implementation, the method may further include: The cloud management platform receives, from the hard link creation interface, a second hard link creation request sent by the first client or a second client, where the second hard link creation request carries the identifier of the source object in the data bucket, and indicates to create, in the data bucket, a second object that has a hard link relationship with the source object; and the cloud management platform creates, in the data bucket based on the second hard link creation request, the second object that has the hard link relationship with the source object, sets an identifier and an attribute for the second object, and records a correspondence between the identifier of the second object and the attribute of the second object, where the attribute of the second object is set to be the same as the attribute of the source object. In this way, the source object may be directly hard-linked to another object.

In a possible implementation, the method may further include: The cloud management platform receives, from the hard link creation interface, a second hard link creation request sent by the first client or a second client, where the second hard link creation request carries the identifier of the first object in the data bucket, and indicates to create, in the data bucket, a second object that has a hard link relationship with the first object; and the cloud management platform creates, in the data bucket based on the second hard link creation request, the second object that has the hard link relationship with the first object, sets an identifier and an attribute for the second object, and records a correspondence between the identifier of the second object and the attribute of the first object, where the attribute of the second object is set to be the same as the attribute of the first object. Because the attribute of the first object is the same as the attribute of the source object, the attribute of the second object is also the same as the attribute of the source object. In this way, the source object may be indirectly hard-linked to another object.

In a possible implementation, the cloud management platform further records a quantity of identifiers that have a correspondence with the attribute of the source object. In this way, the cloud management platform manages the inode metadata which indicates the attribute of the source object. When the quantity is 0, the cloud management platform may delete the inode metadata of the source object.

In a possible implementation, the method may further include: In response to a deletion operation performed by a tenant on a target object, the cloud management platform deletes the target object, and updates the quantity of identifiers that have the correspondence with the attribute of the source object, where the target object is the source object or an object that has a hard link relationship with the source object.

In a possible implementation, the method may further include: The cloud management platform deletes the index node (inode) metadata of the source object when the quantity of identifiers that have the correspondence with the attribute of the source object is 0, where the inode metadata of the source object indicates the attribute of the source object.

In a possible implementation, the method may further include: In response to a modification operation performed by the tenant on a target object, the cloud management platform updates the target object, and synchronously updates an object that has a hard link relationship with the target object, where the target object is the source object or an object that has a hard link relationship with the source object.

In a possible implementation, the method may further include: After creating, in the data bucket, the object that has the hard link relationship with the source object, the cloud management platform returns, to a target client, a message indicating that a hard link is successfully created, where the target client is a client that delivers a hard link creation request. In this way, the tenant can learn whether the hard link is successfully created.

According to a second aspect, this application provides an object storage service configuration apparatus based on a cloud computing technology. The apparatus may be disposed on a cloud management platform. A cloud management platform may be configured to manage an infrastructure for running an object storage service. The infrastructure includes a plurality of data centers disposed in different regions, and each data center includes a plurality of servers.

The apparatus may include a storage module, a communication module, and a processing module. The storage module is configured to record a correspondence between an identifier of a source object in a data bucket of the OBS service and an attribute of the source object, where the attribute of the source object indicates a data chunk distribution location and a data size of the source object in the infrastructure. The communication module is configured to receive, from a hard link creation interface, a first hard link creation request sent by a first client, where the first hard link creation request carries the identifier of the source object in the data bucket, and indicates the cloud management platform to create, in the data bucket, a first object that has a hard link relationship with the source object, and the hard link creation interface is disposed on the cloud management platform. The processing module is configured to: create, in the data bucket based on the first hard link creation request, the first object that has the hard link relationship with the source object, set an identifier and an attribute for the first object, and record a correspondence between the identifier of the first object and the attribute of the first object, where the attribute of the first object is set to be the same as the attribute of the source object.

In a possible implementation, the identifier of the source object is indicated by using directory entry (dentry) metadata of the source object, and the attribute of the source object is indicated by using index node (inode) metadata of the source object. The dentry metadata and the inode metadata of the source object are obtained by splitting metadata of the source object. The identifier of the first object is indicated by using dentry metadata of the first object, and the attribute of the first object is indicated by using the inode metadata of the source object.

In a possible implementation, the communication module is further configured to receive, from the hard link creation interface, a second hard link creation request sent by the first client or a second client, where the second hard link creation request carries the identifier of the source object in the data bucket, and indicates to create, in the data bucket, a second object that has a hard link relationship with the source object. The processing module is further configured to: create, in the data bucket based on the second hard link creation request, the second object that has the hard link relationship with the source object, set an identifier and an attribute for the second object, and record a correspondence between the identifier of the second object and the attribute of the second object, where the attribute of the second object is set to be the same as the attribute of the source object.

In a possible implementation, the communication module is further configured to receive, from the hard link creation interface, a second hard link creation request sent by the first client or a second client, where the second hard link creation request carries the identifier of the first object in the data bucket, and indicates to create, in the data bucket, a second object that has a hard link relationship with the first object. The processing module is further configured to: create, in the data bucket based on the second hard link creation request, the second object that has the hard link relationship with the first object, set an identifier and an attribute for the second object, and record a correspondence between the identifier of the second object and the attribute of the first object, where the attribute of the second object is set to be the same as the attribute of the first object.

In a possible implementation, the storage module further records a quantity of identifiers that have a correspondence with the attribute of the source object.

In a possible implementation, the processing module is further configured to: in response to a deletion operation performed by a tenant on a target object, delete the target object, and update the quantity of identifiers that have the correspondence with the attribute of the source object, where the target object is the source object or an object that has a hard link relationship with the source object.

In a possible implementation, the processing module is further configured to: delete the index node (inode) metadata of the source object when the quantity of identifiers that have the correspondence with the attribute of the source object is 0, where the inode metadata of the source object indicates the attribute of the source object.

In a possible implementation, the processing module is further configured to: in response to a modification operation performed by the tenant on a target object, update the target object, and synchronously update an object that has a hard link relationship with the target object, where the target object is the source object or an object that has a hard link relationship with the source object.

In a possible implementation, the communication module is further configured to: after the processing module creates, in the data bucket, the object that has the hard link relationship with the source object, return, to a target client, a message indicating that a hard link is successfully created, where the target client is a client that delivers a hard link creation request.

According to a third aspect, this application provides a computing device, including: at least one memory, configured to store a program; and at least one processor, configured to execute the program stored in the memory. When the program stored in the memory is executed, the processor is configured to perform the method described in any one of the first aspect or the possible implementations of the first aspect.

According to a fourth aspect, this application provides a computing device cluster, including at least one computing device, where each computing device includes a processor and a memory, and the processor of the at least one computing device is configured to execute instructions stored in the memory of the at least one computing device, to enable the computing device cluster to perform the method described in any one of the first aspect or the possible implementations of the first aspect.

According to a fifth aspect, this application provides a computer-readable storage medium, where the computer-readable storage medium stores a computer program. When the computer program is run on a processor, the processor is enabled to perform the method described in any one of the first aspect or the possible implementations of the first aspect.

According to a sixth aspect, this application provides a computer program product. When the computer program product runs on a processor, the processor is enabled to perform the method described in any one of the first aspect or the possible implementations of the first aspect.

It may be understood that, for beneficial effects of the second aspect to the sixth aspect, refer to related descriptions in the first aspect. Details are not described herein again.

### BRIEF DESCRIPTION OF DRAWINGS

The following briefly describes the accompanying drawings that need to be used in descriptions of embodiments or a conventional technology.
FIG. 1 is a diagram of a logical architecture of an object storage service according to an embodiment of this application;
FIG. 2 is a diagram of a form of interaction between a user and a cloud management platform according to an embodiment of this application;
FIG. 3 is a schematic flowchart of an object storage service configuration method based on a cloud computing technology according to an embodiment of this application;
FIG. 4 is a diagram of a structure of an object storage service configuration apparatus based on a cloud computing technology according to an embodiment of this application;
FIG. 5 is a diagram of a structure of a data center according to an embodiment of this application;
FIG. 6 is a diagram of a structure of a computing device according to an embodiment of this application; and
FIG. 7 is a diagram of a structure of a computing device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

The terms "first", "second", and the like in the specification and claims of this specification are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner.

In the descriptions of embodiments of this application, unless otherwise specified, "a plurality of" means two or more. For example, a plurality of processing units are two or more processing units, and a plurality of elements are two or more elements.

To facilitate understanding of embodiments of this application, some terms in this application are first explained and described.

### (1) Cloud management platform

The cloud management platform may provide a page related to a public cloud service for a tenant to remotely access the public cloud service. The tenant may use a pre-registered account and password to log in to the cloud management platform on a public cloud access page. After successfully logging in to the cloud management platform, the tenant selects and purchases a corresponding public cloud service, such as an object storage service, a virtual machine service, or a container service, on the public cloud access page. For the object storage service, the tenant may further configure the object storage service through a configuration interface, an application programming interface (application programming interface, API), an interface for interacting with the tenant, or the like provided on the public cloud access page, for example, perform operations for a bucket such as creating the bucket, configuring an access policy for the bucket, and uploading an object from a local computer of the tenant to the bucket over the Internet. For example, the object storage service may be an OBS (object storage service), a COS (cloud object storage service), or an Amazon S3 (Amazon simple storage service).

### (2) Bucket (bucket)

The bucket (which may also be referred to as a "data bucket") is a container for storing an object in an object storage service. Object storage provides a flat storage mode based on the bucket and the object. All objects in the bucket are at a same logical layer, and a multi-layer tree directory structure in a file system is removed. Each bucket has its own attributes such as a storage class, an access permission, and a region. A tenant may create buckets with different storage classes and access permissions in different regions and configure more advanced attributes to satisfy storage requirements in different scenarios.

In the object storage service, a bucket name is globally unique and cannot be changed. In other words, a name of a bucket created by the tenant cannot be the same as a name of another bucket that has been created by the tenant and cannot be the same as a name of a bucket created by another tenant. After the bucket is created, a region to which the bucket belongs also cannot be changed. When each bucket is created, a default bucket access control list (access control list, ACL) is generated. Each item in the ACL includes a permission such as a read permission or a write permission granted to an authorized tenant. A tenant can perform operations on a bucket, for example, creating, deleting, displaying, and setting a bucket ACL, only when the tenant has a corresponding permission for the bucket.

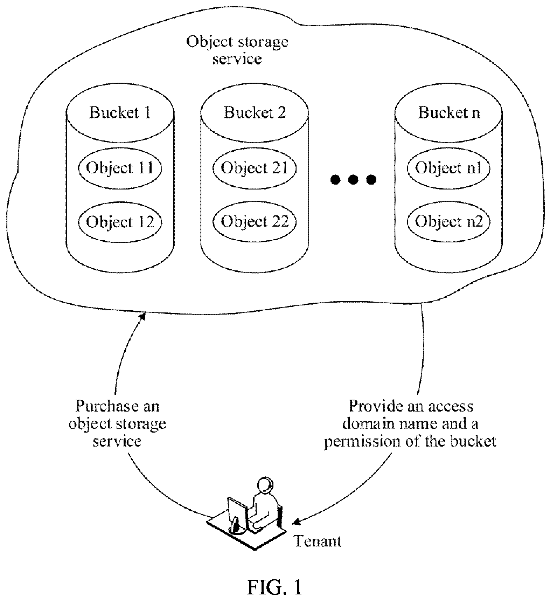

The tenant may use an account to log in to a cloud management platform and may create a plurality of buckets through a configuration interface, an API, an interface for interacting with the tenant, or the like on a public cloud access page provided by the cloud management platform. A quantity and a total size of objects stored in each bucket are not limited. The tenant does not need to consider data scalability. The object storage service is a service based on a representational state transfer (representational state transfer, REST) style, a hypertext transport protocol (hypertext transport protocol, HTTP), and a hypertext transfer protocol secure (hypertext transfer protocol secure, HTTPS) protocol. The tenant may locate a bucket resource by using a uniform resource locator (uniform resource locator, URL, also referred to as a domain name in embodiments). A relationship between a bucket and an object in an object storage service is shown in FIG. 1. FIG. 1 is a diagram of a logical architecture of the object storage service. As shown in FIG. 1, each bucket may include a plurality of objects (which is described in detail below), and objects in buckets are isolated from each other. The tenant remotely purchases the object storage service by operating a client. The object storage service provides the bucket for the tenant, and may specifically provide a domain name of the bucket. The tenant may operate the client to access the domain name, to upload data to the bucket, and download data from the bucket. The uploaded data is stored in the bucket as objects.

### (3) Object (object)

The object is a basic data storage unit of an object storage service. An object is actually a collection of data and related attribute information (metadata) of a file. Data uploaded by a tenant to the object storage service is stored in a bucket as objects. The object includes three parts: a key (Key), metadata (Metadata), and data (Data).

Key: The key is a name of the object. For example, the key is a character sequence encoded in UTF-8 with a length greater than 0 and not exceeding 1024. Each object in a bucket has a unique object key.

Metadata: The metadata is object description information (for example, an object name, an object size, an object permission, and data chunk distribution), and includes system metadata and tenant metadata. The metadata is uploaded to the object storage service in a form of a key-value (Key-Value) pair. The system metadata is automatically generated by the object storage service and is used for processing object data. The system metadata includes a date (Date), a content length Content-length, last modification time Last-modify, MD5 encrypted content Content-MD5, and the like. The tenant metadata is specified when the tenant uploads the object to the bucket, and is object description information customized by the tenant.

Data: The data is data content uploaded by the tenant.

Generally, the object may be managed as a file. To enable the tenant to manage the data more conveniently, the object storage service provides a manner for simulating a folder: adding "/" to a name of an object, for example, "test/123.jpg", where in this case, "test" is simulated as a folder, and "123.jpg" is simulated as a file name in the folder "test". Actually, an object name (Key) is "test/123.jpg", and data Data is the file 123.jpg.

### (4) Directory entry (dentry) metadata

The dentry metadata refers to a directory entry of a Linux file system. The dentry metadata mainly includes a directory/an object name and an index node number (inode number), and does not include another attribute such as an object size, an object owner, or data chunk distribution. The dentry metadata may be used to query corresponding inode metadata based on the object name.

### (5) Index node (inode) metadata

The inode metadata is used to record file attributes except an object name, including an inode number, an object size, an object owner, data chunk distribution, and the like.

### (6) Hard link

The hard link is a connection made through an index node. In a Linux file system, regardless of a type of an object stored in a disk partition, a number is allocated to the object, where the number is referred to as an index node number (Inode Number). In Linux, there are a plurality of object names pointing to a same index node. Generally, this link is a hard link. The hard link is to allow one object to have a plurality of valid path names. In this way, a user can establish a hard link to an important object to prevent the object from being "deleted by mistake". As described above, a reason is that there is more than one link to an index node of a corresponding directory. Deleting only one link does not affect a link between the index node and another object. Data chunk and directory links of the object are released only after a last link is deleted. In other words, a condition for really deleting the object is that all related objects with hard links to the object are deleted.

### (7) Object storage device (object storage device, OSD)

The OSD is a basic storage unit of an object storage system, is disposed on a physical disk, and is specifically storage space with a fixed size of the physical disk. The object storage system manages physical disks of a plurality of computing devices in a form of the OSD.

The following describes the technical solutions provided in embodiments of this application.

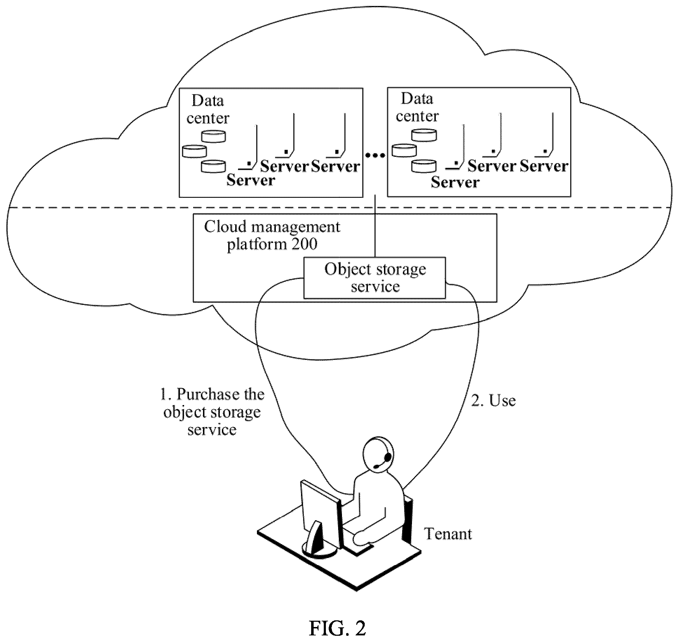

For example, FIG. 2 is a diagram of a form of interaction between a tenant and a cloud management platform. As shown in FIG. 2, the form of interaction between the tenant and the cloud management platform 200 mainly includes: The tenant logs in to the cloud management platform 200 by using a client web page, and selects and purchases a cloud service of an object storage service from the cloud management platform 200. After purchasing the cloud service, the tenant may perform object storage based on a function provided by the object storage service. The cloud management platform 200 is mainly configured to manage an infrastructure for running the object storage service. For example, the infrastructure for running the object storage service may include a plurality of data centers disposed in different regions, and each data center includes a plurality of servers. The data center may provide a basic resource for the object storage service, for example, a computing resource or a storage resource. Therefore, when purchasing and using the object storage service, the tenant pays for used resources. When using the object storage service, the tenant inputs a command through a configuration interface, an API, an interface for interacting with the tenant, or the like provided by the cloud management platform 200, and the cloud management platform 200 may execute the command input by the tenant, for example, create a hard link.

The following describes, based on the content shown in FIG. 2, an object storage service configuration method based on a cloud computing technology according to an embodiment of this application.

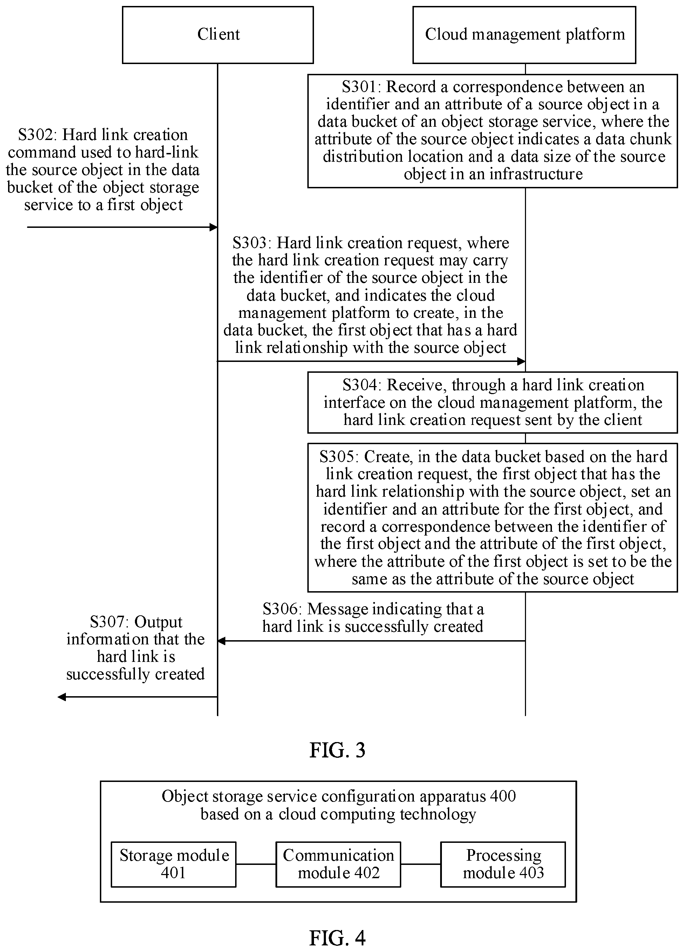

For example, FIG. 3 is a schematic flowchart of an object storage service configuration method based on a cloud computing technology. As shown in FIG. 3, the object storage service configuration method based on a cloud computing technology may include the following steps.

S301: A cloud management platform records a correspondence between an identifier of a source object in a data bucket of an object storage service and an attribute of the source object, where the attribute of the source object indicates a data chunk distribution location and a data size of the source object in an infrastructure.

In this embodiment, after a tenant stores the source object in the data bucket of the object storage service, the cloud management platform may record the correspondence between the identifier and the attribute of the source object in the data bucket. The attribute of the source object may indicate the data chunk distribution location and the data size of the source object in the infrastructure that provides the object storage service. In some embodiments, the source object described in this embodiment may include a file or an object. The file may be mapped to an object. For example, when the source object is a file, after the file is stored in the object storage service, the file may be referred to as an object; and before the file is stored in the object storage service, the file may be referred to as a file.

In some embodiments, the identifier of the source object recorded by the cloud management platform may be indicated by using dentry metadata of the source object, and the attribute of the source object may be indicated by using inode metadata of the source object. The dentry metadata and the inode metadata of the source object may be obtained by splitting metadata of the source object. For example, the metadata of the source object may be understood as description information of the source object, for example, an object name, the data size of the object, and the data chunk distribution location. The dentry metadata of the source object may include the object name and an inode number of the source object, and the inode metadata of the source object includes the data size and the data chunk distribution location of the source object.

S302: A client obtains a hard link creation command input by the tenant, where the hard link creation command may be used to hard-link the source object in the data bucket to a first object.

In this embodiment, the tenant may open a command line window on a computing device on which the client is installed, and input the hard link creation command in the window. Certainly, the tenant may alternatively input the hard link creation command in another manner. For example, after the tenant logs in to the cloud management platform via the computing device, the tenant may input the hard link creation command through a configuration interface on the cloud management platform. This is not limited herein. After the tenant completes the input and delivers a confirmation instruction, the computing device obtains the hard link creation command input by the tenant. The hard link creation command is used to hard-link the source object in the data bucket in the object storage service to the first object. For example, the hard link creation command may include an identifier of the data bucket, the identifier of the source object, and an identifier of the first object. The first object and the source object are located in the same data bucket. In some embodiments, the first object may be an object that already exists in the data bucket, or may be an object that does not exist in the data bucket.

For example, when an operating system of the computing device is a Linux system, if a user wants to hard-link, in bucket (bucket) 1 in the object storage service, object (file) 1 in bucket1 to object (file) 2, after the tenant opens the command window on the computing device, the tenant may input "In/bucket1/file1/file2" in the window. bucket1 is the identifier of the data bucket, filel is the identifier of the source object, and file2 is an identifier of an object that needs to establish a hard link to the source object.

Further, after obtaining the hard link creation command, the computing device may send, through a system kernel (for example, a Linux kernel) on the computing device, the command to the client (for example, s3fs or s3curl) that has been installed on the computing device. The system kernel on the computing device and the client on the computing device may communicate with each other according to a filesystem in userspace (filesystem in userspace, FUSE) protocol.

In a possible implementation, the tenant may alternatively directly perform input on the client. In this case, after the tenant completes the input of the hard link creation command and delivers the confirmation instruction, the client may obtain the hard link creation command.

S303: The client sends a hard link creation request to the cloud management platform, where the hard link creation request may carry the identifier of the source object in the data bucket, and indicates the cloud management platform to create, in the data bucket, the first object that has a hard link relationship with the source object.

In this embodiment, after obtaining the hard link creation command, the client may communicate with the cloud management platform according to a hypertext transfer protocol (hypertext transfer protocol, HTTP), and send the hard link creation request to the cloud management platform. The hard link creation request may carry the identifier of the source object in the data bucket, and indicates the cloud management platform to create, in the data bucket, the first object that has the hard link relationship with the source object. For example, the hard link creation request may be referred to as a first hard link creation request.

For example, the client may send the hard link creation request by using a POST request method defined in HTTP. If the hard link creation command input by the tenant is In/bucket1/file1/file2, a format of a POST request may be POST/bucketl/file1?createhardlink&destfile=file2 HTTP/1.1. In addition, the POST request may further include a domain name of the data bucket, for example, Host: bucket1.obs.cn-north-4.xxxcloud.com; or may include a tenant signature, for example, Authorization: signature Value.

S304: The cloud management platform receives, through a hard link creation interface on the cloud management platform, the hard link creation request sent by the client, where the hard link creation request carries the identifier of the source object in the data bucket, and indicates the cloud management platform to create, in the data bucket, the first object that has the hard link relationship with the source object.

In this embodiment, the hard link creation interface is configured on the cloud management platform. The cloud management platform may receive, through the hard link creation interface, the hard link creation request sent by the client. For example, the hard link creation interface on the cloud management platform may include but is not limited to: a configuration interface, an API, an interface for interacting with the tenant, or the like. After the client sends the hard link creation request, the cloud management platform may obtain the hard link creation request.

S305: The cloud management platform creates, in the data bucket based on the hard link creation request, the first object that has the hard link relationship with the source object, sets the identifier and an attribute for the first object, and records a correspondence between the identifier of the first object and the attribute of the first object, where the attribute of the first object is set to be the same as the attribute of the source object.

In this embodiment, after obtaining the hard link creation request, the cloud management platform may create, in the data bucket in which the source object is located based on data and an indication that are carried in the hard link creation request, the first object that has the hard link relationship with the source object, set the identifier and the attribute for the first object, and record the correspondence between the identifier of the first object and the attribute of the first object. The cloud management platform may set the attribute of the first object to be the same as the attribute of the source object.

In some embodiments, the identifier of the first object recorded by the cloud management platform may be indicated by using dentry metadata of the first object, and the attribute of the first object may be indicated by using the inode metadata of the source object. In other words, the first object and the source object have the same inode metadata.

S306: The cloud management platform returns, to the client, a message indicating that a hard link is successfully created.

In this embodiment, after establishing the correspondence between the identifier of the first object and the attribute of the source object, the cloud management platform completes hard-linking the source object to the first object. In this case, the cloud management platform may return, to the client according to the HTTP protocol, the message indicating that the hard link is successfully created.

S307: The client outputs information that the hard link is successfully created.

In this embodiment, after obtaining the message that is returned by the cloud management platform and that indicates that the hard link is successfully created, the client may output the information that the hard link is successfully created, to notify the tenant that the hard link is successfully created.

Therefore, in the object storage service, an attribute of one object is associated with identifiers of a plurality of objects, so that the attribute of the object points to the identifiers of different objects. In this way, an object is hard-linked to another object in the object storage service, in other words, the hard link is created in the object storage service.

In some embodiments, after the source object is hard-linked to the first object in FIG. 3, when the tenant has another hard link requirement, the tenant may further hard-link the source object to another object (referred to as a "second object" below). In this case, the source object may be directly hard-linked to the second object, or the source object may be indirectly hard-linked to the second object in a manner in which the first object is hard-linked to the second object. Descriptions are separately provided below.
(a) The source object is directly hard-linked to the second object.

In this case, the hard link creation request may be sent to the cloud management platform in the manner described in S302 and S303 in FIG. 3, and only the first object in S302 and S303 needs to be replaced with the second object. For details, refer to the foregoing descriptions. In this case, the hard link creation request may carry the identifier of the source object in the data bucket, and indicates to create, in the data bucket, the second object that has a hard link relationship with the source object.

Then, the cloud management platform may receive, from the hard link creation interface on the cloud management platform, a hard link creation request sent by a client (where the client may be the same as or different from the client described in FIG. 3, and this is not limited herein).

Finally, the cloud management platform may create, in the data bucket in which the source object is located based on the hard link creation request, the second object that has the hard link relationship with the source object, set an identifier and an attribute for the second object, and record a correspondence between the identifier of the second object and the attribute of the second object. The cloud management platform may set the attribute of the second object to be the same as the attribute of the source object. In some embodiments, the identifier of the second object recorded by the cloud management platform may be indicated by using dentry metadata of the second object, and the attribute of the second object may be indicated by using the inode metadata of the source object. In other words, the second object, the first object, and the source object have the same inode metadata.

In this way, the identifier of the second object is associated with the attribute of the source object, in other words, the attribute of the source object points to the identifier of the second object, so that the source object is directly hard-linked to the second object. In addition, the cloud management platform may further return, to the corresponding client, a message indicating that the hard link is successfully created, so that the tenant learns whether the hard link is successfully created.

(b) The source object is indirectly hard-linked to the second object in the manner in which the first object is hard-linked to the second object.

In this case, the hard link creation request may be sent to the cloud management platform in the manner described in S302 and S303 in FIG. 3. Only the source object in S302 and S303 needs to be replaced with the first object, and then the original first object is replaced with the second object. For example, in this case, the hard link creation command in S302 is changed to be used to hard-link the first object in the data bucket in the object storage service to the second object. For details, refer to the foregoing descriptions. In this case, the hard link creation request may carry the identifier of the first object in the data bucket, and indicates to create, in the data bucket, the second object that has a hard link relationship with the first object.

Then, the cloud management platform may receive, from the hard link creation interface on the cloud management platform, a hard link creation request sent by a client (where the client may be the same as or different from the client described in FIG. 3, and this is not limited herein).

Finally, the cloud management platform may create, in the data bucket in which the first object is located based on the hard link creation request, the second object that has the hard link relationship with the first object, set an identifier and an attribute for the second object, and record a correspondence between the identifier of the second object and the attribute of the second object. The cloud management platform may set the attribute of the second object to be the same as the attribute of the first object. In some embodiments, the identifier of the second object recorded by the cloud management platform may be indicated by using dentry metadata of the second object, and the attribute of the second object may be indicated by using the inode metadata of the source object. In other words, the second object, the first object, and the source object have the same inode metadata.

Because the attribute of the first object is the same as the attribute of the source object, the identifier of the second object is associated with the attribute of the source object, in other words, the attribute of the source object points to the identifier of the second object, so that the source object is indirectly hard-linked to the second object in the manner in which the first object is hard-linked to the second object. In addition, the cloud management platform may further return, to the client on the computing device, a message indicating that the hard link is successfully created, so that the tenant learns whether the hard link is successfully created.

In some embodiments, in addition to recording a correspondence between an identifier and an attribute of each object, the cloud management platform may further record a quantity of identifiers that have a correspondence with the attribute of the source object. This facilitates management of data indicating the attribute of the source object.

Each time the cloud management platform hard-links the source object to an object, the cloud management platform may increase the quantity of identifiers that have the correspondence with the attribute of the source object by 1. For example, in FIG. 3, if the source object is only hard-linked to the first object, the quantity of identifiers that have the correspondence with the attribute of the source object is 2.

In addition, when the tenant deletes the source object or an object that has a hard link relationship with the source object, after the cloud management platform obtains the deletion operation of the tenant, the cloud management platform may delete a corresponding object from the object storage service, and may update the quantity of identifiers that have the correspondence with the attribute of the source object. For example, in FIG. 3, if the source object is only hard-linked to the first object, and if the tenant deletes the source object, the cloud management platform may delete the source object from the object storage service, and update the quantity of identifiers that have the correspondence with the attribute of the source object from 2 to 1.

When the quantity of identifiers that have the correspondence with the attribute of the source object is 0, it indicates that both the source object and the object that has the hard link relationship with the source object have been deleted. Therefore, in this case, the cloud management platform may delete the inode metadata of the source object recorded by the cloud management platform, where the inode metadata of the source object indicates the attribute of the source object. When deleting an object in the object storage service, the cloud management platform may delete dentry metadata of the object recorded by the cloud management platform, where the dentry metadata of the object indicates an identifier of the object.

In some embodiments, because objects that have a hard link relationship may be understood as a same object, when the tenant modifies an object, and the cloud management platform obtains the modification operation of the tenant, the cloud management platform may update the object modified by the tenant, and synchronously update an object that has a hard link relationship with the object.

In some embodiments, after creating, in the data bucket, the object that has the hard link relationship with the source object, the cloud management platform may return, to a target client, a message indicating that the hard link is successfully created. The target client is a client that delivers the hard link creation request.

It may be understood that sequence numbers of the steps in the foregoing embodiments do not mean execution sequences. The execution sequences of processes should be determined based on functions and internal logic of the processes, and should not be construed as any limitation on implementation processes of embodiments of this application. In addition, in some possible implementations, the steps in the foregoing embodiments may be selectively performed, or may be partially or completely performed based on an actual situation. This is not limited herein.

The foregoing describes the object storage service configuration method based on a cloud computing technology according to an embodiment of this application. For ease of understanding, the following uses examples for description.

For example, an object 1 (referred to as "file1" below) is stored in a data bucket of an object storage service, and a tenant needs to hard-link file1 to an object 2 (referred to as "file2" below). A correspondence that is between an identifier and an attribute of file1 and that is recorded in a cloud management platform may be shown in Table 1. In Table 1, the identifier of file1 is file1, a data size and a data chunk distribution location indicated by using the attribute are respectively 10000 and xxx. In addition, in Table 1, an object name and an inode No. may be understood as dentry metadata of file1, and the data size, an object owner, the data chunk distribution location, and the others may be understood as inode metadata of file1.

**Table 1**

| | Object name | inode No. | Data size | Object owner | Data chunk distribution location | Others |
|---|---|---|---|---|---|---|
| Metadata of file1 | file 1 | 200 | 10000 | Root | xxx | xxx |

In addition, the correspondence that is between the identifier and the attribute of file1 and that is recorded in the cloud management platform may alternatively be shown in Table 2. In Table 2, the identifier of filel is file1, and is indicated by using dentry metadata of file1. A data size and a data chunk distribution location indicated by using the attribute of file1 are respectively 10000 and xxx, and the attribute of file1 is indicated by using inode metadata of file1. In Table 2, the dentry metadata and the inode metadata of file1 are obtained by splitting the metadata of file1 in Table 1. In Table 2, a quantity of links in the inode metadata of file1 refers to a quantity of pieces of dentry metadata to which the inode metadata of file1 points. Certainly, the quantity of links may alternatively exist independently, in other words, the quantity of links does not belong to the inode metadata of file1. This is not limited herein. For example, the metadata of file1 may be further recorded in Table 2. This is not limited herein.

**Table 2**

| | Object name | inode No. | Quantity of links | Data size | Object owner | Data chunk distribution location | Others |
|---|---|---|---|---|---|---|---|
| dentry metadata of file1 | file 1 | 200 | | | | | |
| inode metadata of file1 | | | 1 | 10000 | Root | xxx | xxx |

After receiving a hard link creation request through a hard link creation interface on the cloud management platform, the cloud management platform may create file2 in the data bucket in which file1 is located, and set an identifier of file2 to "file2". In addition, the cloud management platform may split the metadata of file1to obtain the dentry metadata and the inode metadata of file 1. When the correspondence that is between the identifier and the attribute of file1 and that is recorded in the cloud management platform is shown in Table 2, it indicates that the cloud management platform has completed splitting of the metadata of file1 in advance. Therefore, splitting does not need to be performed in this case.

Then, the cloud management platform may set an attribute of file2 to the attribute of file1, in other words, the inode metadata of file1 is used as inode metadata of file2. In this case, the correspondence between the identifier and the attribute of file1 and a correspondence between the identifier and the attribute of file2 that are recorded in the cloud management platform may be shown in Table 3. In Table 3, dentry metadata of file2 indicates the identifier of file2, and the inode metadata of file2 is the inode metadata of file1. In addition, in Table 3, because the quantity of pieces of dentry metadata to which the inode metadata of file1 points is 2, the quantity of links in the inode metadata of file1 is 2. For example, the metadata of file1 may be further recorded in Table 3. This is not limited herein.

**Table 3**

| | Object name | inode No. | Quantity of links | Data size | Object owner | Data chunk distribution location | Others |
|---|---|---|---|---|---|---|---|
| dentry metadata of file1 | file1 | 200 | | | | | |
| inode metadata of file1 | | | 2 | 10000 | Root | xxx | xxx |
| dentry metadata of file2 | file2 | 200 | | | | | |

When the tenant needs to hard-link file1or file2 to an object 3 (referred to as "file3" below), after the cloud management platform receives the hard link creation request, the cloud management platform may create file3 in the data bucket in which file 1 is located, set an identifier of file3 to "file3", and set an attribute of file3 to the attribute of file1, in other words, use the inode metadata of file1 as inode metadata of file3. In this case, the correspondence between the identifier and the attribute of file1, the correspondence between the identifier and the attribute of file2, and a correspondence between the identifier and the attribute of file3 that are recorded in the cloud management platform may be shown in Table 4. In Table 4, dentry metadata of file3 indicates the identifier of file3, and the inode metadata of file3 is the inode metadata of file1. In addition, in Table 4, because the quantity of pieces of dentry metadata to which the inode metadata of file 1 points is 3, the quantity of links in the inode metadata of file1 is 3.

**Table 4**

| | Object name | inode No. | Quantity of links | Data size | Object owner | Data chunk distribution location | Others |
|---|---|---|---|---|---|---|---|
| dentry metadata of file1 | file1 | 200 | | | | | |
| inode metadata of file1 | | | 3 | 10000 | Root | xxx | xxx |
| dentry metadata of file2 | file2 | 200 | | | | | |
| dentry metadata of file3 | file3 | 200 | | | | | |

It can be learned from Table 2, Table 3, and Table 4 that, when file1 is hard-linked to another object, the cloud management platform only needs to add dentry metadata of the another object to the table that is recorded by the cloud management platform and that has the dentry metadata and the inode metadata of file1, and change the quantity of pieces of dentry metadata to which the inode metadata of file1 points. In Table 4, after the tenant deletes file3, the cloud management platform may delete the dentry metadata of file3 from Table 4, and change the quantity of links in the inode metadata of file1 to 2. In this case, Table 3 is obtained.

Therefore, the metadata of the source object in the object storage service is split into the dentry metadata and the inode metadata, and dentry metadata of an object to which the source object needs to be hard-linked. The inode metadata of the source object is used as inode metadata of the object to which the source object needs to have a hard link. In other words, the hard link is created in the object storage service provided by the cloud management platform. It should be understood that, after the hard link is created, same inode metadata points to dentry metadata of different objects. Therefore, after the inode metadata is modified by using any object, another object to which the inode metadata points may also read the modification performed by the tenant.

Based on the object storage service configuration method based on the cloud computing technology in the foregoing embodiment, an embodiment of this application provides an object storage service configuration apparatus based on a cloud computing technology.

For example, FIG. 4 is a diagram of a structure of an object storage service configuration apparatus based on a cloud computing technology. A cloud management platform may be configured to manage an infrastructure for running an object storage service. The infrastructure includes a plurality of data centers disposed in different regions, and each data center includes a plurality of servers.

As shown in FIG. 4, the object storage service configuration apparatus 400 based on the cloud computing technology may include a storage module 401, a communication module 402, and a processing module 403. The storage module 401 is configured to record a correspondence between an identifier of a source object in a data bucket of the object storage service and an attribute of the source object, where the attribute of the source object indicates a data chunk distribution location and a data size of the source object in the infrastructure.

The communication module 402 is configured to receive, from a hard link creation interface, a first hard link creation request sent by a first client, where the first hard link creation request carries the identifier of the source object in the data bucket, and indicates the cloud management platform to create, in the data bucket, a first object that has a hard link relationship with the source object, and the hard link creation interface is disposed on the cloud management platform.

The processing module 403 is configured to: create, in the data bucket based on the first hard link creation request, the first object that has the hard link relationship with the source object, set an identifier and an attribute for the first object, and record a correspondence between the identifier of the first object and the attribute of the first object, where the attribute of the first object is set to be the same as the attribute of the source object.

In some embodiments, the identifier of the source object is indicated by using directory entry (dentry) metadata of the source object, and the attribute of the source object is indicated by using index node (inode) metadata of the source object. The dentry metadata and the inode metadata of the source object are obtained by splitting metadata of the source object. The identifier of the first object is indicated by using dentry metadata of the first object, and the attribute of the first object is indicated by using the inode metadata of the source object.

In some embodiments, the communication module 402 is further configured to receive, from the hard link creation interface, a second hard link creation request sent by the first client or a second client, where the second hard link creation request carries the identifier of the source object in the data bucket, and indicates to create, in the data bucket, a second object that has a hard link relationship with the source object. The processing module 403 is further configured to: create, in the data bucket based on the second hard link creation request, the second object that has the hard link relationship with the source object, set an identifier and an attribute for the second object, and record a correspondence between the identifier of the second object and the attribute of the second object, where the attribute of the second object is set to be the same as the attribute of the source object.

In some embodiments, the communication module 402 is further configured to receive, from the hard link creation interface, a second hard link creation request sent by the first client or a second client, where the second hard link creation request carries the identifier of the first object in the data bucket, and indicates to create, in the data bucket, a second object that has a hard link relationship with the first object. The processing module 403 is further configured to: create, in the data bucket based on the second hard link creation request, the second object that has the hard link relationship with the first object, set an identifier and an attribute for the second object, and record a correspondence between the identifier of the second object and the attribute of the first object, where the attribute of the second object is set to be the same as the attribute of the first object.

In some embodiments, the storage module 401 further records a quantity of identifiers that have a correspondence with the attribute of the source object.

In some embodiments, the processing module 403 is further configured to: in response to a deletion operation performed by a tenant on a target object, delete the target object, and update the quantity of identifiers that have the correspondence with the attribute of the source object, where the target object is the source object or an object that has a hard link relationship with the source object.

In some embodiments, the processing module 403 is further configured to: delete the index node (inode) metadata of the source object when the quantity of identifiers that have the correspondence with the attribute of the source object is 0, where the inode metadata of the source object indicates the attribute of the source object.

In some embodiments, the processing module 403 is further configured to: in response to a modification operation performed by the tenant on a target object, update the target object, and synchronously update an object that has a hard link relationship with the target object, where the target object is the source object or an object that has a hard link relationship with the source object.

In some embodiments, the communication module 402 is further configured to: after the processing module 403 creates, in the data bucket, the object that has the hard link relationship with the source object, return, to a target client, a message indicating that a hard link is successfully created, where the target client is a client that delivers a hard link creation request.

In some embodiments, the storage module 401, the communication module 402, and the processing module 403 may all be implemented by using software, or may be implemented by using hardware. For example, the following uses the storage module 401 as an example to describe an implementation of the storage module 401. Similarly, for implementations of the communication module 402 and the processing module 403, refer to the implementation of the storage module 401.

The module is used as an example of a software functional unit, and the storage module 401 may include code running on a computing instance. The computing instance may include at least one of a physical host (computing device), a virtual machine, and a container. Further, there may be one or more computing instances. For example, the storage module 401 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the storage module 401 may include at least one computing device like a server. Alternatively, the storage module 401 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the storage module 401 may be distributed in a same region, or may be distributed in different regions. A plurality of computing devices included in the storage module 401 may be distributed in a same AZ, or may be distributed in different AZs. Similarly, the plurality of computing devices included in the storage module 401 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the storage module 401 may be configured to perform any step in the foregoing described method, the communication module 402 may be configured to perform any step in the method provided in the foregoing embodiment, and the processing module 403 may be configured to perform any step in the method provided in the foregoing embodiment. Alternatively, steps whose implementations are responsible by the storage module 401, the communication module 402, and the processing module 403 may be specified as required, and the storage module 401, the communication module 402, and the processing module 403 respectively implement different steps in the method provided in the foregoing embodiment, to implement all functions of the object storage service configuration apparatus 400 based on the cloud computing technology.

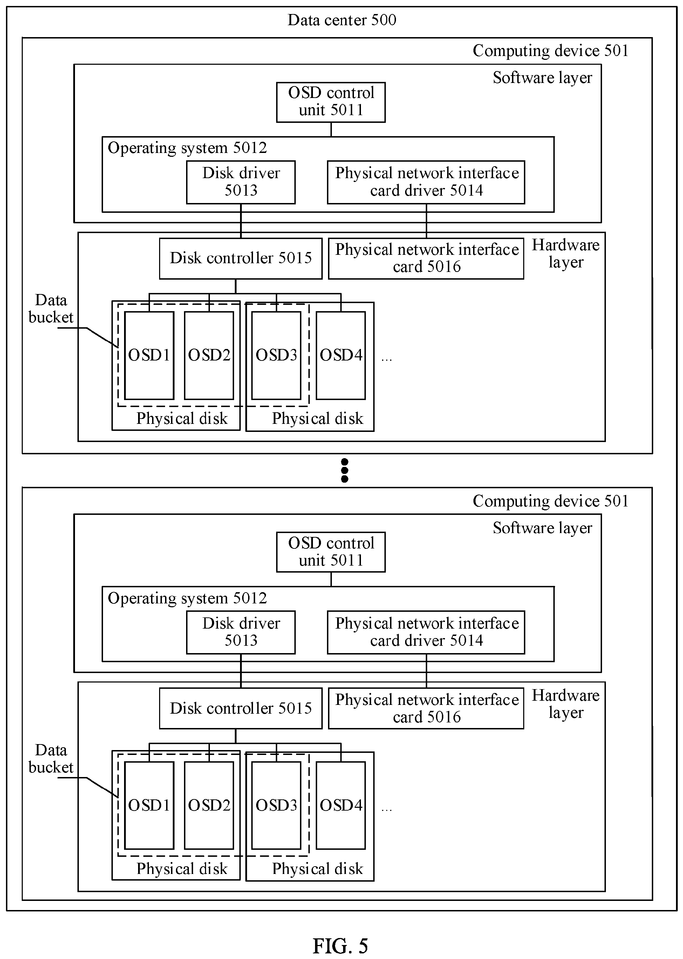

This application further provides a data center 500. The data center 500 may be, but is not limited to, the data center described in FIG. 2. As shown in FIG. 5, the data center 500 may include a plurality of computing devices 501. Different computing devices 501 may communicate with each other through a network. Each computing device 501 includes a software layer and a hardware layer. The hardware layer in each computing device 501 includes a disk controller 5015, a physical network interface card 5016, and at least one physical disk. The software layer includes an OSD control unit 5011 and an operating system 5012. The OSD control unit 5011 runs on the operating system 5012, and the operating system 5012 includes a disk driver 5013 and a physical network interface card driver 5014. For any computing device 501 in the data center 500, the cloud management platform 200 shown in FIG. 2 may communicate with the OSD control unit 5011 via the physical network interface card 5016 on the computing device. The OSD control unit 5011 controls, via the disk driver 5013, the disk controller 5015 to set the physical disk in the computing device as a plurality of object storage devices OSDs. After receiving a data bucket creation instruction, the cloud management platform 200 shown in FIG. 2 notifies the OSD control unit 5011 to create a data bucket, in this case, the OSD control unit 5011 sets OSD1 to OSD3 as data buckets.

In the data center 500, a data chunk distribution location of each object in the data bucket may be, but is not limited to, an address recorded in the cloud management platform 200 shown in FIG. 2. A form of the address may be: computing device identifier + OSD identifier + offset + data length. Two objects that have a hard link relationship have a same address, but are objects with different names for a tenant.

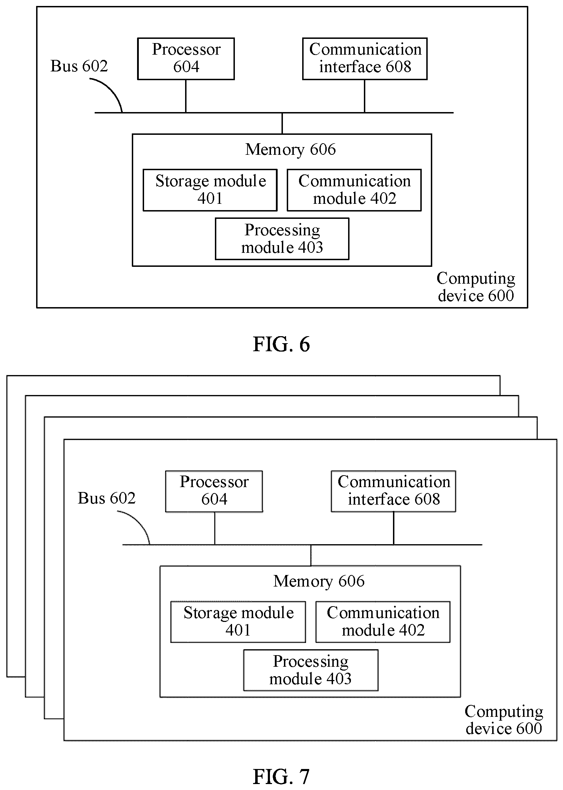

This application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that a quantity of processors and a quantity of memories in the computing device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 6, but this does not mean that there is only one bus or one type of bus. The bus 602 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 604 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to separately implement functions of the foregoing storage module 401, communication module 402, and processing module 403, to implement all or some of the steps of the method in the foregoing embodiment. In other words, the memory 606 stores instructions used to perform all or some of the steps of the method in the foregoing embodiment.

Alternatively, the memory 606 stores executable code, and the processor 604 executes the executable code to separately implement functions of the foregoing object storage service configuration apparatus 400 based on a cloud computing technology, to implement all or some of the steps of the method in the foregoing embodiment. In other words, the memory 606 stores instructions used to perform all or some of the steps of the method in the foregoing embodiment.

The communication interface 603 uses a transceiver module, for example, but not limited to a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 6, the computing device cluster includes the at least one computing device 600. Memories 606 in one or more computing devices 600 in the computing device cluster may store same instructions used to perform all or some of the steps of the method in the foregoing embodiment.

In some possible implementations, the memories 606 in the one or more computing devices 600 in the computing device cluster may alternatively separately store some instructions used to perform all or some of the steps of the methods in the foregoing embodiment. In other words, a combination of the one or more computing devices 600 may jointly execute the instructions used to perform all or some of the steps of the method in the foregoing embodiment.

It should be noted that the memories 606 in different computing devices 600 in the computing device cluster may store different instructions, which are respectively used to perform some functions of the object storage service configuration apparatus 400 based on a cloud computing technology. In other words, the instructions stored in the memories 606 in the different computing devices 600 may implement functions of one or more of the foregoing storage module 401, communication module 402, and processing module 403.

In some possible implementations, the one or more computing devices in the computing device cluster may be connected through a network. The network may be a wide area network, a local area network, or the like.

Based on the method in the foregoing embodiment, an embodiment of this application provides a computer-readable storage medium. The computer-readable storage medium stores a computer program. When the computer program is run on a processor, the processor is enabled to perform method in the foregoing embodiment.

Based on the method in the foregoing embodiment, an embodiment of this application provides a computer program product. When the computer program product runs on a processor, the processor is enabled to perform the method in the foregoing embodiment.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write the information into the storage medium. Certainly, the storage medium may alternatively be a component of the processor. The processor and the storage medium may be disposed in the ASIC.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using a computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. An object storage service configuration method based on a cloud computing technology, wherein the method is applied to a cloud management platform, the cloud management platform is configured to manage an infrastructure for running an object storage service, the infrastructure comprises a plurality of data centers disposed in different regions, each data center comprises a plurality of servers, and the method comprises:
Recording, by the cloud management platform, a correspondence between an identifier of a source object in a data bucket of the object storage service and an attribute of the source object, wherein the attribute of the source object indicates a data chunk distribution location and a data size of the source object in the infrastructure;
receiving, by the cloud management platform from a hard link creation interface, a first hard link creation request sent by a first client, wherein the first hard link creation request carries the identifier of the source object in the data bucket, and indicates the cloud management platform to create, in the data bucket, a first object that has a hard link relationship with the source object, and the hard link creation interface is disposed on the cloud management platform; and
creating, by the cloud management platform in the data bucket based on the first hard link creation request, the first object that has the hard link relationship with the source object, setting an identifier and an attribute for the first object, and recording a correspondence between the identifier of the first object and an attribute of a first file, wherein the attribute of the first object is set to be the same as the attribute of the source object.

2. The method according to claim 1, wherein the identifier of the source object is indicated by using directory entry (dentry) metadata of the source object, the attribute of the source object is indicated by using index node (inode) metadata of the source object, and the dentry metadata and the inode metadata of the source object are obtained by splitting metadata of the source object; and
the identifier of the first object is indicated by using dentry metadata of the first object, and the attribute of the first object is indicated by using the inode metadata of the source object.

3. The method according to claim 1 or 2, wherein the method further comprises:
receiving, by the cloud management platform from the hard link creation interface, a second hard link creation request sent by the first client or a second client, wherein the second hard link creation request carries the identifier of the source object in the data bucket, and indicates to create, in the data bucket, a second object that has a hard link relationship with the source object; and
creating, by the cloud management platform in the data bucket based on the second hard link creation request, the second object that has the hard link relationship with the source object, setting an identifier and an attribute for the second object, and recording a correspondence between the identifier of the second object and the attribute of the second object, wherein the attribute of the second object is set to be the same as the attribute of the source object.

4. The method according to claim 1 or 2, wherein the method further comprises:
receiving, by the cloud management platform from the hard link creation interface, a second hard link creation request sent by the first client or a second client, wherein the second hard link creation request carries the identifier of the first object in the data bucket, and indicates to create, in the data bucket, a second object that has a hard link relationship with the first object; and
creating, by the cloud management platform in the data bucket based on the second hard link creation request, the second object that has the hard link relationship with the first object, setting an identifier and an attribute for the second object, and recording a correspondence between the identifier of the second object and the attribute of the first object, wherein the attribute of the second object is set to be the same as the attribute of the first object.

5. The method according to any one of claims 1 to 4, wherein the cloud management platform further records a quantity of identifiers that have a correspondence with the attribute of the source object.

6. The method according to claim 5, wherein the method further comprises:
in response to a deletion operation performed by a tenant on a target object, deleting, by the cloud management platform, the target object, and updating the quantity of identifiers that have the correspondence with the attribute of the source object, wherein the target object is the source object or an object that has a hard link relationship with the source object.

7. The method according to claim 5 or 6, wherein the method further comprises:
deleting, by the cloud management platform, the index node (inode) metadata of the source object when the quantity of identifiers that have the correspondence with the attribute of the source object is 0, wherein the inode metadata of the source object indicates the attribute of the source object.

8. The method according to any one of claims 1 to 7, wherein the method further comprises:
in response to a modification operation performed by the tenant on a target object, updating, by the cloud management platform, the target object, and synchronously updating an object that has a hard link relationship with the target object, wherein the target object is the source object or an object that has a hard link relationship with the source object.

9. The method according to any one of claims 1 to 8, wherein the method further comprises:
after creating, in the data bucket, the object that has the hard link relationship with the source object, returning, by the cloud management platform to a target client, a message indicating that a hard link is successfully created, wherein the target client is a client that delivers a hard link creation request.

10. An object storage service configuration apparatus based on a cloud computing technology, wherein the apparatus is deployed on a cloud management platform, the cloud management platform is configured to manage an infrastructure for running an object storage service, the infrastructure comprises a plurality of data centers disposed in different regions, each data center comprises a plurality of servers, and the apparatus comprises:
a storage module, configured to record a correspondence between an identifier of a source object in a data bucket of the object storage service and an attribute of the source object, wherein the attribute of the source object indicates a data chunk distribution location and a data size of the source object in the infrastructure;
a communication module, configured to receive, from a hard link creation interface, a first hard link creation request sent by a first client, wherein the first hard link creation request carries the identifier of the source object in the data bucket, and indicates the cloud management platform to create, in the data bucket, a first object that has a hard link relationship with the source object, and the hard link creation interface is disposed on the cloud management platform; and
a processing module, configured to: create, in the data bucket based on the first hard link creation request, the first object that has the hard link relationship with the source object, set an identifier and an attribute for the first object, and record a correspondence between the identifier of the first object and the attribute of the first object, wherein the attribute of the first object is set to be the same as the attribute of the source object.

11. The apparatus according to claim 10, wherein the identifier of the source object is indicated by using directory entry (dentry) metadata of the source object, the attribute of the source object is indicated by using index node (inode) metadata of the source object, and the dentry metadata and the inode metadata of the source object are obtained by splitting metadata of the source object; and
the identifier of the first object is indicated by using dentry metadata of the first object, and the attribute of the first object is indicated by using the inode metadata of the source object.

12. The apparatus according to claim 10 or 11, wherein
the communication module is further configured to receive, from the hard link creation interface, a second hard link creation request sent by the first client or a second client, wherein the second hard link creation request carries the identifier of the source object in the data bucket, and indicates to create, in the data bucket, a second object that has a hard link relationship with the source object; and
the processing module is further configured to: create, in the data bucket based on the second hard link creation request, the second object that has the hard link relationship with the source object, set an identifier and an attribute for the second object, and record a correspondence between the identifier of the second object and the attribute of the second object, wherein the attribute of the second object is set to be the same as the attribute of the source object.

13. The apparatus according to claim 10 or 11, wherein
the communication module is further configured to receive, from the hard link creation interface, a second hard link creation request sent by the first client or a second client, wherein the second hard link creation request carries the identifier of the first object in the data bucket, and indicates to create, in the data bucket, a second object that has a hard link relationship with the first object; and
the processing module is further configured to: create, in the data bucket based on the second hard link creation request, the second object that has the hard link relationship with the first object, set an identifier and an attribute for the second object, and record a correspondence between the identifier of the second object and the attribute of the first object, wherein the attribute of the second object is set to be the same as the attribute of the first object.

14. The apparatus according to any one of claims 10 to 13, wherein the storage module further records a quantity of identifiers that have a correspondence with the attribute of the source object.

15. The apparatus according to claim 14, wherein
the processing module is further configured to: in response to a deletion operation performed by a tenant on a target object, delete the target object, and update the quantity of identifiers that have the correspondence with the attribute of the source object, wherein the target object is the source object or an object that has a hard link relationship with the source object.

16. The apparatus according to claim 14 or 15, wherein
the processing module is further configured to delete the index node (inode) metadata of the source object when the quantity of identifiers that have the correspondence with the attribute of the source object is 0, wherein the inode metadata of the source object indicates the attribute of the source object.

17. The apparatus according to any one of claims 10 to 16, wherein
the processing module is further configured to: in response to a modification operation performed by the tenant on a target object, update the target object, and synchronously update an object that has a hard link relationship with the target object, wherein the target object is the source object or an object that has a hard link relationship with the source object.

18. The apparatus according to any one of claims 10 to 17, wherein
the communication module is further configured to: after the processing module creates, in the data bucket, the object that has the hard link relationship with the source object, return, to a target client, a message indicating that a hard link is successfully created, wherein the target client is a client that delivers a hard link creation request.

19. A computing device, comprising:
at least one memory, configured to store a program; and
at least one processor, configured to execute the program stored in the memory, wherein
when the program stored in the memory is executed, the processor is configured to perform the method according to any one of claims 1 to 9.

20. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 9.

21. A computer-readable storage medium, wherein the computer-readable storage medium stores a computer program, and when the computer program is run on a processor, the processor is enabled to perform the method according to any one of claims 1 to 9.

22. A computer program product, wherein when the computer program product runs on a processor, the processor is enabled to perform the method according to any one of claims 1 to 9.
